# EUROPEAN PATENT APPLICATION

(11) **EP 2 228 404 A1**
(43) Date of publication of application: **15.09.2010**
(21) Application number: 08867109.4
(22) Date of filing: 25.12.2008
(51) Int. Cl.: C08L 29/04, C08F 8/12

(54) **METHOD FOR PRODUCING EVOH RESIN COMPOSITION**

(30) Priority: 27.12.2007 JP 2007335892
(71) Applicant: The Nippon Synthetic Chemical Industry Co., Ltd., Osaka-shi Osaka 531-0076 (JP)
(72) Inventor: BENIYA, Yasufumi, Osaka-shi Osaka 531-0076 (JP); FUJIMURA, Keisuke, Osaka-shi Osaka 531-0076 (JP); HARAO, Akio, Osaka-shi Osaka 531-0076 (JP)
(74) Representative: Kuhnen & Wacker
(86) International application number: PCT/JP2008/073658
(87) International publication number: WO 2009/084607

(57) **Abstract**

It is a process for manufacturing a resin mixture of a saponified ethylene-vinyl ester copolymer, which is a resin mixture of a saponified ethylene-vinyl ester copolymer (A) having an ethylene content of 20 to 60% and a saponified modified ethylene-vinyl ester copolymer (B) having an ethylene content of 20 to 60% and comprising a structural unit (1): 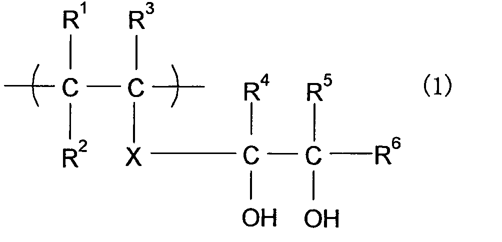 wherein a mixture of an ethylene-vinyl ester copolymer (A') obtained by copolymerizing ethylene and vinyl ester and a modified ethylene-vinyl ester copolymer (B') obtained by copolymerizing ethylene, vinyl ester and at least one kind of monomers (2) to (4) (for example, 3,4-diacetoxy-1-butene) is saponified in one system, wherein the ethylene content of the ethylene-vinyl ester copolymer (A') is larger than the ethylene content of the modified ethylene-vinyl ester copolymer (B').

## Description

### Technical Field

The present invention relates to a process for manufacturing a composition of a solvolysis product of an ethylene-vinyl ester copolymer (hereinafter referred to as an EVOH resin) containing an EVOH resin and a modified EVOH resin, and particularly to a process for manufacturing an EVOH resin composition containing an EVOH resin (A) and a modified EVOH resin (B) comprising a structural unit represented by the general formula (1) described later.

### Background Art

In order to improve gas barrier properties and formability of an EVOH resin, there have hitherto been studied techniques for using in a molded product an EVOH resin composition in which two or more kinds of EVOH resins different, for example, in ethylene content, degree of saponification or the like are mixed.

The EVOH resin composition in which the different EVOH resins are mixed as described above is mainly used in melt molding, so that it is preferred that the resin composition uniformly melts by heat and uniformly solidifies after molding.
However, in a technique for mixing the different EVOH resins, there are mixed the EVOH resins different from each other in ethylene content, saponification degree, the kind of modifying group, modified amount or the like. As a matter of course, the melting points of the respective EVOH resins are different, so that the resulting EVOH resin composition has a plurality of melting peaks.
Hence, when the resulting EVOH resin composition is melt mixed and/or melt molded, compatibility of composition components becomes insufficient because of their uneven meltability, and phase separation tends to occur because of their different solidifying speed, which has posed a problem that thickness unevenness or streaks occur in the molded product obtained from the EVOH resin composition.

On the other hand, there has been proposed a technique for obtaining a laminate decreased in neck-in even in the case of high-speed film formation, excellent in stretchability and stable in gas barrier properties after stretching, by manufacturing an EVOH resin composition in which a modified EVOH resin composition comprising a structural unit represented by the following general formula (1) and a normal EVOH resin composition are mixed, and laminating a layer of such a resin composition and a polyolefm resin layer (for example, see patent document 1).

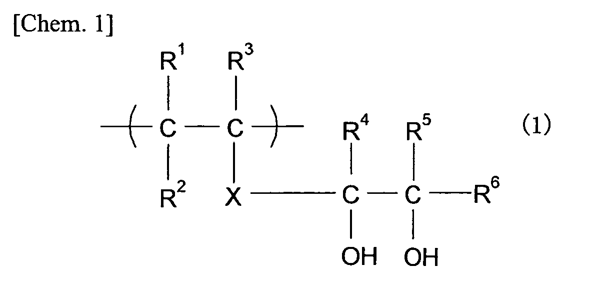

wherein R¹, R² and R³ each independently represent a hydrogen atom or an organic group, X represents a single bond or a bonding chain, and R⁴, R⁵ and R⁶ each independently represent a hydrogen atom or an organic group.

However, in manufacturing such an EVOH resin composition containing the modified EVOH resin comprising the modified group and the normal EVOH resin, when the modified EVOH resin having previously controlled ethylene content, degree of saponification or degree of modification so as to decrease the melting peak difference between the respective EVOH resins, and the normal EVOH resin are each separately manufactured and then mixed, the respective resins must be separately manufactured. Accordingly, productivity tends to be impaired.
Further, when the resins before solvolysis are mixed and solvolyzed at the same time, the melting peaks come close to each other, and productivity is improved. However, the melting peak difference has still been large and insufficient.
[Patent Document 1] JP-A-2006-124668 (corresponding U.S. Patent Application No. 2007-0178268)

### Disclosure of the Invention

### Problems That the Invention Is to Solve

It is therefore an object of the invention to provide an EVOH resin composition comprising a modified EVOH resin comprising a structural unit represented by the above-mentioned general formula (1) and a different EVOH resin, wherein the melting peak difference is particularly decreased by a simple process, and productivity and formability are excellent.

### Means for Solving the Problems

In view of the above-mentioned circumstances, the present inventors have made intensive studies. As a result, it has been found that when the ethylene content of the above-mentioned ethylene-vinyl ester copolymer (hereinafter referred to as the EVA resin) (A') is made higher than the ethylene content of a modified EVA resin (B'), the melting peak difference of an EVOH resin composition is decreased, thus completing the invention.

That is to say, the subject matters of the invention are as follows:
[1] A process for manufacturing a composition of a solvolysis product of an ethylene-vinyl ester copolymer, which comprises conducting solvolysis of an ethylene-vinyl ester copolymer (A') and a modified ethylene-vinyl ester copolymer (B') comprising a structural unit derived from a compound represented by the general formula (2) in one system to manufacture the composition of a solvolysis product of an ethylene-vinyl ester copolymer comprising a solvolysis product (A) of the ethylene-vinyl ester copolymer and a solvolysis product (B) of the modified ethylene-vinyl ester copolymer comprising a structural unit represented by the general formula (1), wherein a ratio of an ethylene content (B')/(A') of the ethylene-vinyl ester copolymer (A') and the modified ethylene-vinyl ester copolymer (B') in the step of conducting solvolysis is 0.3 or more and less than 1: 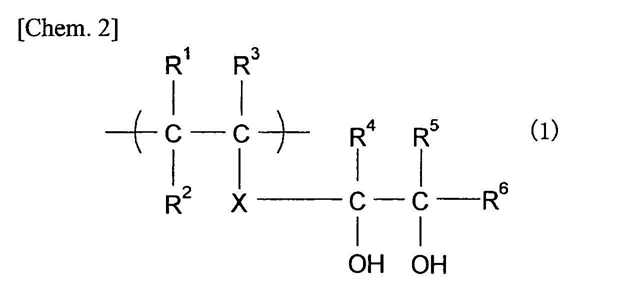 wherein R¹, R² and R³ each independently represent a hydrogen atom or an organic group, X represents a single bond or a bonding chain, and R⁴, R⁵ and R⁶ each independently represent a hydrogen atom or an organic group; and 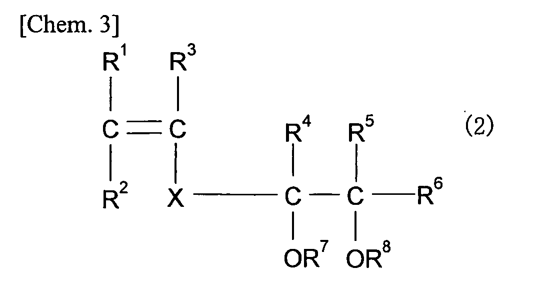 wherein R¹, R² and R³ each independently represent a hydrogen atom or an organic group, X represents a single bond or a bonding chain, R⁴, R⁵ and R⁶ each independently represent a hydrogen atom or an organic group, R⁷ and R⁸ each independently represent a hydrogen atom, a hydrocarbon group or R⁹-CO- (wherein R⁹ represents an alkyl group), R⁷ and R⁸ may bond to form a five-membered ring and the five-membered ring represents a cyclic carbonate structure or a cyclic acetal structure.
[2] The process for manufacturing a composition of a solvolysis product of an ethylene-vinyl ester copolymer according to [1], wherein a blending ratio (A')/(B') of the ethylene-vinyl ester copolymer (A') and the modified ethylene-vinyl ester copolymer (B') is from 99/1 to 1/99 by weight ratio.
[3] The process for manufacturing a composition of a solvolysis product of an ethylene-vinyl ester copolymer according to [1] or [2], wherein the modified ethylene-vinyl ester copolymer (B') comprises the structural unit derived from a compound represented by the general formula (2) in an amount of 0.1 to 30 mol%.
[4] The process for manufacturing a composition of a solvolysis product of an ethylene-vinyl ester copolymer according to any one of [1] to [3], wherein a difference (A') - (B') in the ethylene content between the ethylene-vinyl ester copolymer (A') and the modified ethylene-vinyl ester copolymer (B') is from 0.1 to 40 mol%.
[5] The process for manufacturing a composition of a solvolysis product of an ethylene-vinyl ester copolymer according to any one of [1] to [4], wherein the ethylene-vinyl ester copolymer (A') and the modified ethylene-vinyl ester copolymer (B') have the ethylene content of 20 to 60 mol%.
[6] The process for manufacturing a composition of a solvolysis product of an ethylene-vinyl ester copolymer according to any one of [1] to [5], wherein the composition of a solvolysis product of an ethylene-vinyl ester copolymer has a difference of melting peak of 0 to 20°C.
[7] The process for manufacturing a composition of a solvolysis product of an ethylene-vinyl ester copolymer according to any one of [1] to [6], wherein the composition of a solvolysis product of an ethylene-vinyl ester copolymer has an average degree of solvolysis of 90 to 100 mol%.
[8] The process for manufacturing a composition of a solvolysis product of an ethylene-vinyl ester copolymer according to any one of [1] to [7], wherein the composition of a solvolysis product of an ethylene-vinyl ester copolymer has an MFR of 1 to 120 g/10 min as a value measured at 210°C under a load of 2160 g.
[9] The process for manufacturing a composition of a solvolysis product of an ethylene-vinyl ester copolymer according to any one of [1] to [8], wherein R¹ to R³ each independently represent an alkyl group having 1 to 4 carbon atoms or a hydrogen atom, and R⁴ to R⁶ each independently represent an alkyl group having 1 to 4 carbon atoms or a hydrogen atom in the structural unit represented by the general formula (1) and the compound represented by the general formula (2).
[10] The process for manufacturing a composition of a solvolysis product of an ethylene-vinyl ester copolymer according to any one of [1] to [9], wherein X represents a single bond or a hydrocarbon chain having 1 to 6 carbon atoms in the structural unit represented by the general formula (1) and the compound represented by the general formula (2).
[11] The process for manufacturing a composition of a solvolysis product of an ethylene-vinyl ester copolymer according to any one of [1] to [8], wherein the compound represented by the general formula (2) is a compound represented by the following general formula (2a): 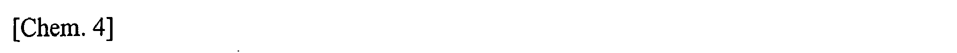 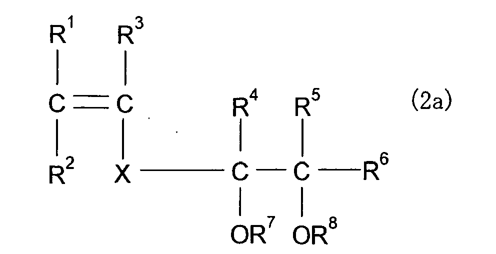 wherein R¹, R² and R³ each independently represent a hydrogen atom or an organic group, X represents a single bond or a bonding chain, R⁴, R⁵ and R⁶ each independently represent a hydrogen atom or an organic group, and R⁷ and R⁸ each independently represent a hydrogen atom or R⁹-CO- (wherein R⁹ represents an alkyl group).
[12] The process for manufacturing a composition of a solvolysis product of an ethylene-vinyl ester copolymer according to any one of [1] to [11], wherein the structural unit represented by the general formula (1) is a structural unit represented by the following general formula (1a); 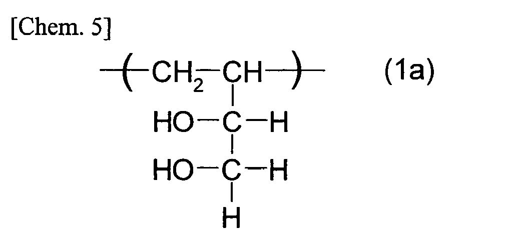 and the compound represented by the general formula (2) is 3,4-diacetoxy-1-butene.
[13] The process for manufacturing a composition of a solvolysis product of an ethylene-vinyl ester copolymer according to any one of [1] to [12], wherein the solvolysis is conducted under a basic condition.
[14] The process for manufacturing a composition of a solvolysis product of an ethylene-vinyl ester copolymer according to any one of [1] to [13], wherein the solvolysis is conducted in an alcohol or a mixed solvent of water/alcohol. Advantages of the Invention

In the invention, the melting peak difference of the EVOH resin composition manufactured by conducting solvolysis of the EVA resin (A') and the modified EVA resin (B') comprising the structural unit derived from the compound represented by the general formula (2) in one system and adjusting the ratio (B')/(A') of the ethylene content of the above-mentioned EVA resin (A') and the ethylene content of the above-mentioned modified EVA resin (B') to 0.3 or more and less than 1 decreases, and unexpected advantages that productivity and formability are improved have been obtained.

### Brief Description of the Drawings

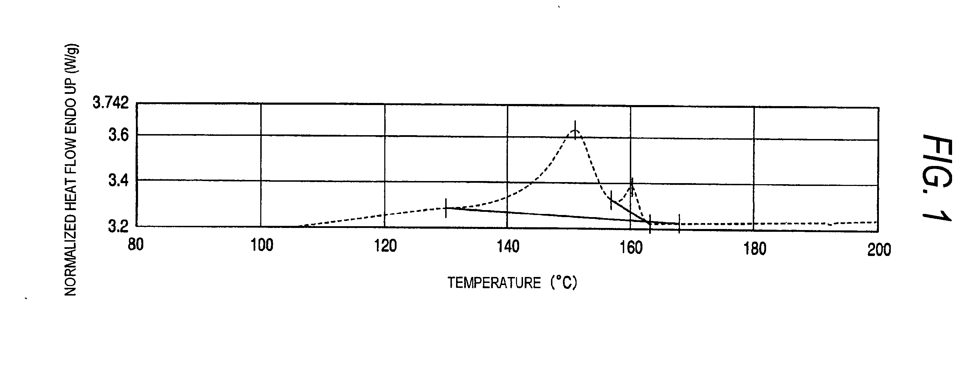

[Fig. 1] Fig. 1 shows a melting peak of an EVOH resin composition in Example 1.

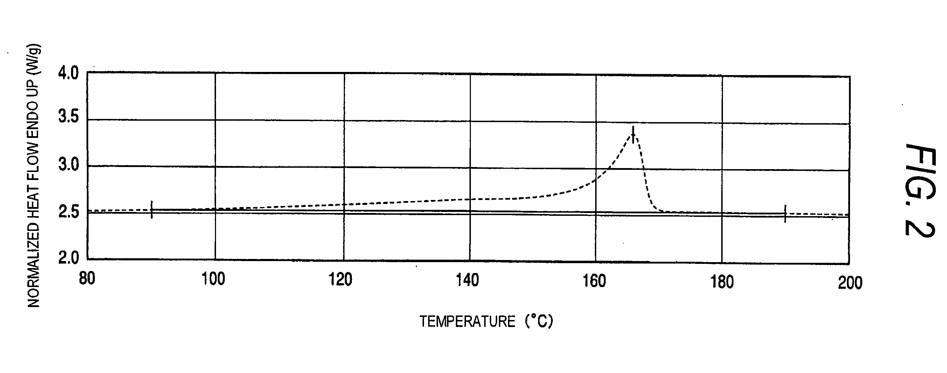

[Fig. 2] Fig. 2 shows a melting peak of an EVOH resin composition in Example 2.

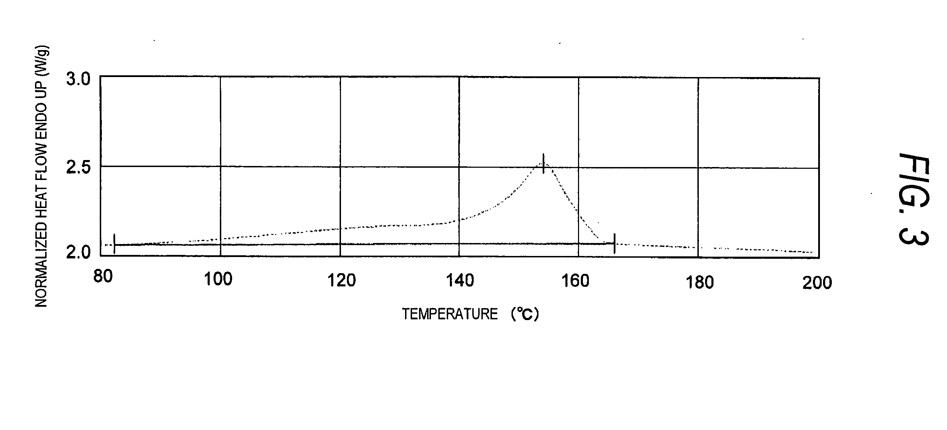

[Fig. 3] Fig. 3 shows a melting peak of an EVOH resin composition in Example 3.

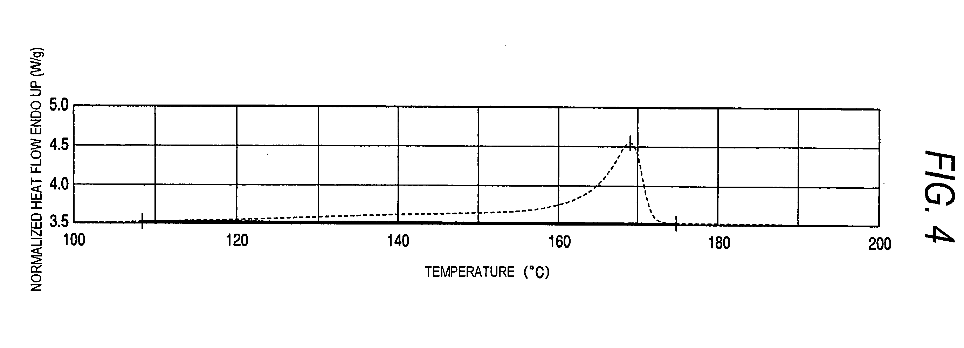

[Fig. 4] Fig. 4 shows a melting peak of an EVOH resin composition in Example 4.

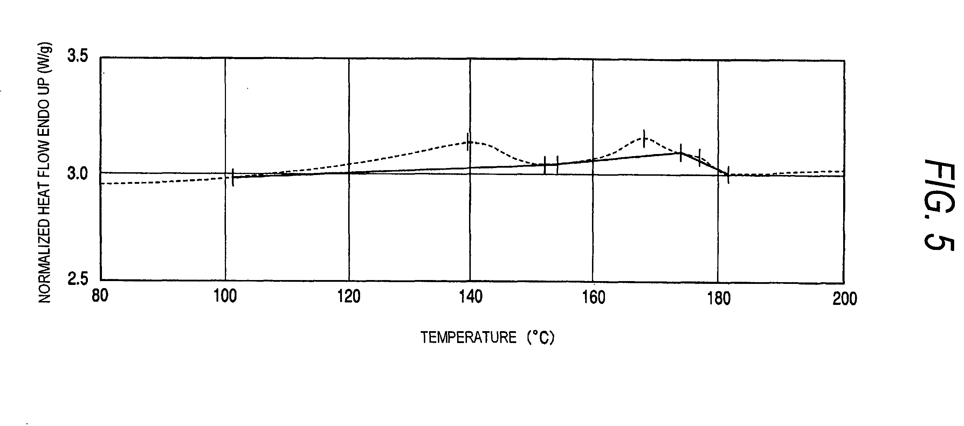

[Fig. 5] Fig. 5 shows a melting peak of an EVOH resin composition in Comparative Example 2.

### Best Mode for Carrying Out the Invention

The invention will be described in detail below, but the description described below is an example (typical example) of an embodiment of the invention and the invention should not be construed as being limited to the contents thereof.

The invention relates to a process for manufacturing an EVOH resin composition comprising: conducting solvolysis of an EVA resin (A') and a modified EVA resin (B') comprising a structural unit derived from a compound represented by the general formula (2) in one system; and manufacturing the EVOH resin composition comprising an EVOH resin (A) and a modified EVOH resin (B) comprising a structural unit represented by the general formula (1), wherein a ratio of the ethylene content (B')/(A') of the EVA resin (A') and the modified EVA resin (B') in the step of conducting the solvolysis is 0.3 or more and less than 1:

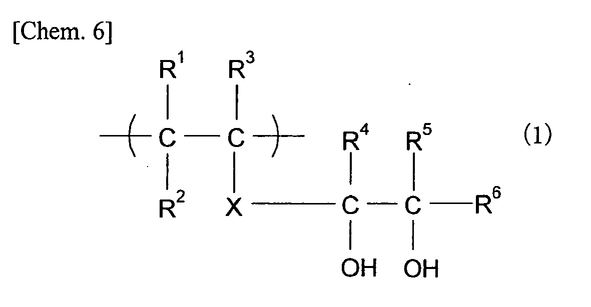

wherein R¹, R² and R³ each independently represent a hydrogen atom or an organic group, X represents a single bond or a bonding chain, and R⁴, R⁵ and R⁶ each independently represent a hydrogen atom or an organic group, and

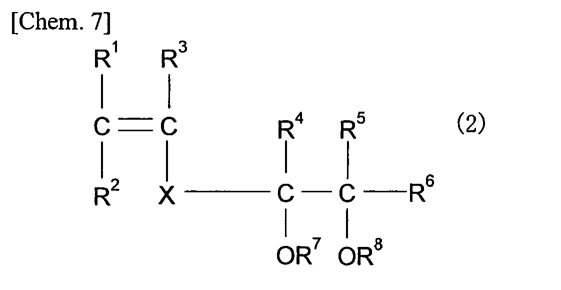

wherein R¹, R² and R³ each independently represent a hydrogen atom or an organic group, X represents a single bond or a bonding chain, R⁴, R⁵ and R⁶ each independently represent a hydrogen atom or an organic group, R⁷ and R⁸ each independently represent a hydrogen atom, a hydrocarbon group or R⁹-CO- (wherein R⁹ represents an alkyl group), R⁷ and R⁸ may bond to form a five-membered ring and the five-membered ring represents a cyclic carbonate structure or a cyclic acetal structure.
Incidentally, the following general formula (3) is an example of a compound in which R⁷ and R⁸ bond to form a five-membered ring and the five-membered ring represents a cyclic carbonate structure in the general formula (2), and the following general formula (4) is an example of a compound in which R⁷ and R⁸ bond to form a five-membered ring and the five-membered ring represents a cyclic acetal structure in the general formula (2):

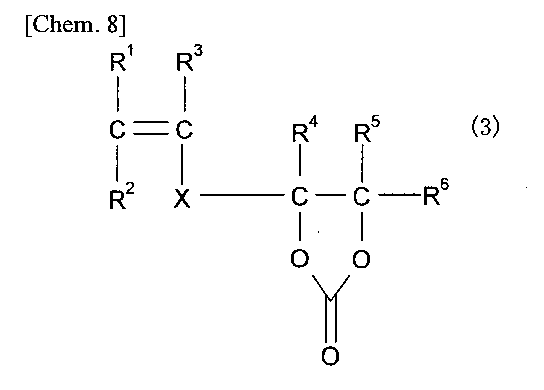

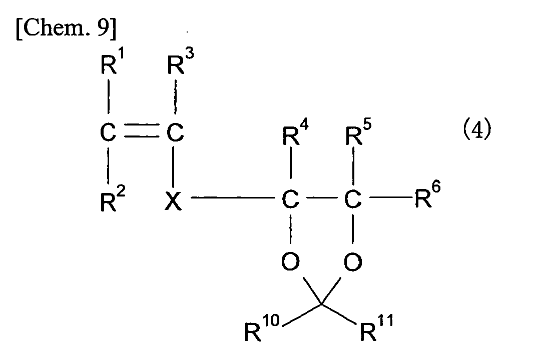

wherein R¹⁰ and R¹¹ represent hydrogen or a hydrocarbon group.

### <Description of EVA Resin (A') and EVOH Resin (A)>

The EVOH resin (A) in the invention is a resin obtained by copolymerizing ethylene and a vinyl ester-based monomer to obtain an EVA resin (A'), and then, conducting solvolysis of the EVA resin (A'). Such resins include known ones generally used as films for food packaging and the like. The EVA resin (A') is manufactured by any known polymerization method, for example, solution polymerization, suspension polymerization, emulsion polymerization or the like.

The above-mentioned vinyl ester-based monomers include, for example, aliphatic vinyl esters such as vinyl formate, vinyl acetate, vinyl propionate, vinyl valerate, vinyl butyrate, vinyl isobutyrate, vinyl pivalate, vinyl caprate, vinyl laurate, vinyl stearate and vinyl versatate, aromatic vinyl esters such as vinyl benzoate, and the like. Generally used is an aliphatic vinyl ester having 3 to 20 carbon atoms, preferably 4 to 10 carbon atoms and particularly preferably 4 to 7 carbon atoms. From an economical point of view, vinyl acetate is particularly preferably used. These are generally used alone, but plural kinds thereof may be used at the same time as needed.

The ethylene contents in the EVA resin (A') and the EVOH (A) do not vary before or after solvolysis and show the same value. It is from 20 to 60 mol%, preferably from 25 to 55 mol%, particularly preferably from 29 to 44 mol% and more particularly preferably from 38 to 44 mol%, as a value measured on the basis of ISO 14663. When such content is too low, formability tends to be insufficient. Conversely, when it is too high, gas barrier properties tend to be insufficient.

Further, the viscosity of the EVA resin (A') is usually from 10¹ to 10⁵ mPa·s, preferably from 10² to 10⁴ mPa·s and particularly preferably from 10² to 10³ mPa·s, as a value measured with a B-type viscometer (rotor: No. 2, rotational speed: 10 rpm, paste temperature: 65°C). When such a value is too high or too low, compatibility tends to become poor.
The viscosity of the EVA resin (A') can be controlled by the resin content. When the resin content is large, the viscosity tends to increase, and when it is small, the viscosity tends to decrease.

### <Description of Modified EVA Resin (B') and Modified EVOH Resin (B)>

The modified EVOH resin (B) comprising the structural unit represented by the general formula (1), which is used in the invention, is known itself.

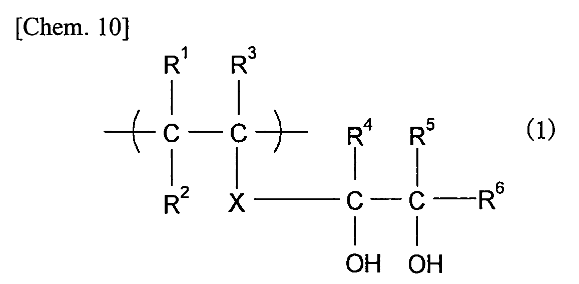

wherein R¹, R² and R³ each independently represent a hydrogen atom or an organic group, X represents a single bond or a bonding chain, and R⁴, R⁵ and R⁶ each independently represent a hydrogen atom or an organic group.

Such a resin is a resin obtained by conducting solvolysis of the modified EVA resin (B') obtained by copolymerization of ethylene, vinyl eater-based monomer and the compound represented by the general formula (2):

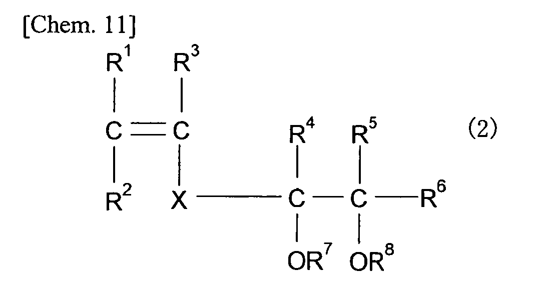

wherein R¹, R² and R³ each independently represent a hydrogen atom or an organic group, X represents a single bond or a bonding chain, R⁴, R⁵ and R⁶ each independently represent a hydrogen atom or an organic group, R⁷ and R⁸ each independently represent a hydrogen atom, a hydrocarbon group or R⁹-CO- (wherein R⁹ is an alkyl group), R⁷ and R⁸ may bond to form a five-membered ring, and the five-membered ring represents a cyclic carbonate structure or a cyclic acetal structure.
Such a compound represented by the general formula (2) is a compound which is solvolyzed under the same conditions as those under which the structural unit derived from the vinyl ester-based monomer is solvolyzed to give the structural unit represented by the above-mentioned general formula (1), when the copolymer is solvolyzed after copolymerization with ethylene and the vinyl ester-based monomer.

Incidentally, as described above, the following general formula (3) is an example of a compound in which R⁷ and R⁸ bond to form a five-membered ring and the five-membered ring represents the cyclic carbonate structure in the general formula (2), and the following general formula (4) is an example of a compound in which R⁷ and R⁸ bond to form a five-membered ring and the five-membered ring represents the cyclic acetal structure in the general formula (2):

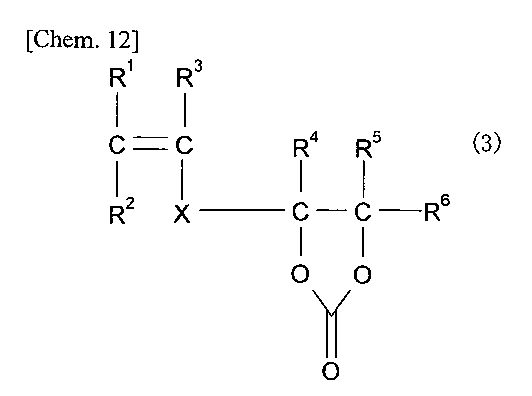

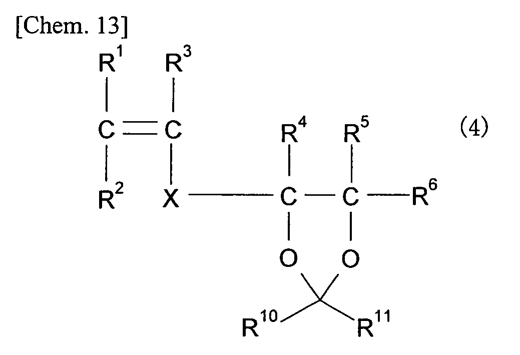

wherein R¹⁰ and R¹¹ represent hydrogen or a hydrocarbon group.

Of the compounds represented by the general formula (2), it is preferred in terms of industrial productivity to use a compound shown in the following general formula (2a):

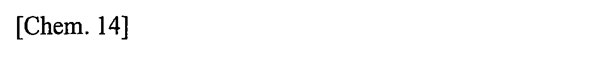

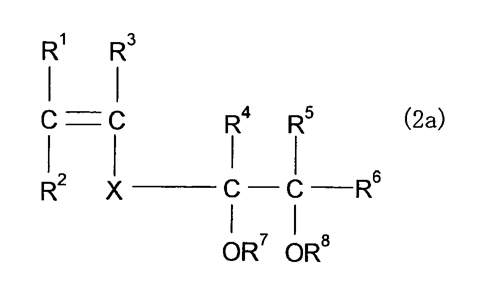

wherein R⁷ and R⁸ each independently represent a hydrogen atom or R⁹-CO- (wherein R⁹ represents an alkyl group).

In the above-mentioned general formula (2a), R¹ to R⁶ have the same meanings as in the above-mentioned general formula (1). R⁷ and R⁸ are each preferably R⁹-CO-. R⁹ usually represents an alkyl group having 1 to 20 carbon atoms, preferably an alkyl group having 1 to 10 carbon atoms from industrial productivity, particularly preferably an alkyl group having 1 to 5 carbon atoms and more particularly preferably a methyl group.
That is to say, specific examples of the compounds shown in the general formula (2a) usually include 3,4-diacyloxy-1-butene, 3-acyloxy-4-ol-1-butene, 4-acyloxy-3-ol-1-butene and 3,4-diacyloxy-2-methyl-1-butene, and preferably 3,4-diol-1-butene, 3,4-diacetoxy-1-butene, 3-acetoxy-4-ol-1-butene, 4-acetoxy-3-ol-1-butene and 3,4-diacetoxy-2-methyl-1-butene. Particularly preferred is 3,4-diacetoxy-1-butene.

As the above-mentioned vinyl ester-based monomer, there is used the same one as used in the above-mentioned EVA resin (A') and EVOH resin (A). It is usually an aliphatic vinyl ester having usually 3 to 20 carbon atoms, preferably 4 to 10 carbon atoms and particularly preferably 4 to 7 carbon atoms. From an economical point of view, vinyl acetate is particularly preferably used. Such vinyl ester-based monomers are generally used alone, but plural kinds thereof may be used at the same time as needed.

The organic groups in the 1,2-diol structural unit represented by the above-mentioned general formula (1) include but are not particularly limited to, for example, alkyl groups such as a methyl group, an ethyl group, a n-propyl group, an isopropyl group, a n-butyl group, an isobutyl group and a tert-butyl group, aromatic hydrocarbon groups such as a phenyl group and a benzyl group, halogen atoms, a hydroxyl group, acyloxy groups, alkoxycarbonyl groups, a carboxyl group, a sulfonic acid group and the like.
R¹ to R³ each independently preferably represent an alkyl group having usually 1 to 30 carbon atoms, preferably 1 to 15 carbon atoms, and more preferably an alkyl group having 1 to 4 carbon atoms or a hydrogen atom. A hydrogen atom is most preferred. R⁴ to R⁶ each independently preferably represent an alkyl group having usually 1 to 30 carbon atoms, preferably 1 to 15 carbon atoms, and more preferably an alkyl group having 1 to 4 carbon atoms or a hydrogen atom. A hydrogen atom is most preferred. In particular, it is most preferred that all of R¹ to R⁶ are hydrogen atoms.

Further, X in the structural unit represented by the general formula (1) is preferably a single bond in that the crystallinity is maintained, resulting in excellent gas barrier properties.
Incidentally, it may be a bonding chain within the range not inhibiting the advantages of the invention. Such bonding chains include, but are not limited to, ether bond site-containing structures such as -O-, -(CH₂O)ₘ-, -(OCH₂)ₘ- and -(CH₂O)ₘCH₂-, carbonyl group-containing structures such as -CO-, -COCO-, -CO(CH₂)ₘCO- and - CO(C₆H₄)CO-, heteroatom-containing structures such as sulfur atom-containing structures such as -S-, -CS-, -SO- and -SO₂-, nitrogen atom-containing structures such as -NR-, -CONR-, -NRCO-, -CSNR-, -NRCS- and -NRNR-, and phosphorus atom-containing structures such as -HPO₄-, and metal atom-containing structures such as silicon atom-containing structures such as -Si(OR)₂-, -OSi(OR)₂- and -OSi(OR)₂O-, titanium atom-containing structures such as -Ti(OR)₂-, -OTi(OR)₂- and -OTi(OR)₂O-and aluminum atom-containing structures such as -Al(OR)-, -OAl(OR)- and - OAl(OR)O- (wherein R each independently represent an arbitrary substituent, preferably a hydrogen atom or an alkyl group, and m is a counting number, and usually from 1 to 30, preferably from 1 to 15, more preferably from 1 to 10). Of these, - CH₂OCH₂- and a hydrocarbon chain having 1 to 10 carbon atoms are preferred in terms of stability at the time of manufacturing and use. Further, a hydrocarbon chain having 1 to 6 carbon atoms, particularly having one carbon atom is preferred.

The most preferred structure in the 1,2-diol structural unit represented by the above-mentioned general formula (1) is one in which all of R¹ to R⁶ are hydrogen atoms and X is a single bond. That is to say, most preferred is a structural unit represented by the following general formula (1a):

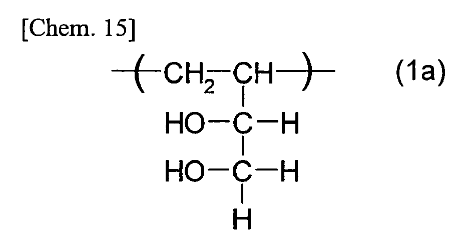

The structural unit of the EVA resin (B') which is a polymer before solvolysis of the EVOH resin (B) will be described below.

### [i] Structural Unit Derived from Compound Represented by General Formula (2)

A structural unit represented by the following general formula (2-1) is the structural unit derived from the compound represented by the general formula (2).

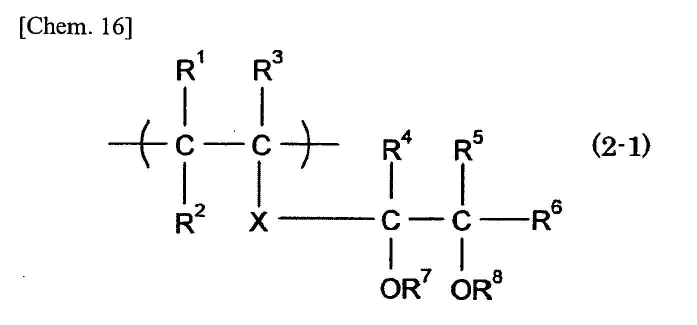

wherein R⁷ and R⁸ each independently represent a hydrogen atom, a hydrocarbon group or R⁹-CO- (wherein R⁹ represents an alkyl group), R⁷ and R⁸ may bond to form a five-membered ring and the five-membered ring represents a cyclic carbonate structure or a cyclic acetal structure.

### [ii] Structural Unit Derived from Compound Represented by General Formula (3)

A structural unit represented by the following general formula (3-1) is the structural unit derived from the compound represented by the general formula (3). Incidentally, the general formula (3) shows an example of a compound in which R⁷ and R⁸ bond to form a five-membered ring and the five-membered ring represents a cyclic carbonate structure in the general formula (2).

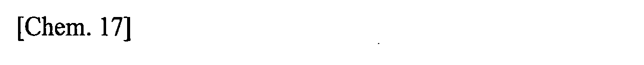

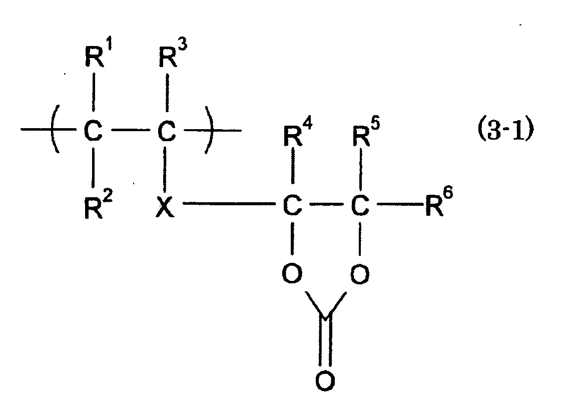

In the above-mentioned general formula (3-1), R¹ to R⁶ have the same meanings as in the above-mentioned general formula (1).

### [iii] Structural Unit Derived from Compound Represented by General Formula (4)

A structural unit represented by the following general formula (4-1) is the structural unit derived from the compound represented by the general formula (4). Incidentally, the general formula (4) shows an example of a compound in which R⁷ and R⁸ bond to form a five-membered ring and the five-membered ring represents a cyclic acetal structure in the general formula (2).

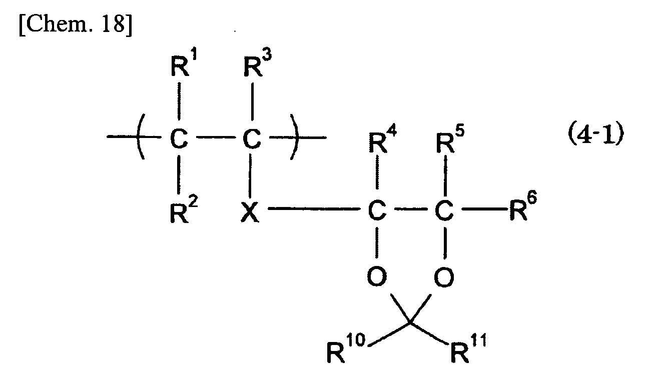

wherein R¹⁰ and R¹¹ represent hydrogen or a hydrocarbon group.
In the above-mentioned general formula (4-1), R¹ to R⁶ have the same meanings as in the above-mentioned general formula (1). R¹⁰ and R¹¹ usually represent an alkyl group having 1 to 20 carbon atoms, preferably an alkyl group 1 to 10 carbon atoms from the standpoint of productivity, particularly preferably an alkyl group having 1 to 5 carbon atoms and more particularly preferably a methyl group.

Further, for example, taking for example the modified EVOH resin comprising the structural unit (1a) which is the most preferred structure, manufacturing processes thereof include [1] a process of using as the comonomer 3,4-diol-1-butene, 3,4-diacyloxy-1-butene, 3-acyloxy-4-ol-1-butene, 4-acyloxy-3-ol-1-butene, 3,4-diacyloxy-2-methyl-1-butene or the like as shown in the general formula (2a), and copolymerizing the vinyl ester-based monomer and ethylene therewith to obtain the copolymer, followed by conducting solvolysis thereof, [2] a process of using as the comonomer vinyl ethylene carbonate or the like as shown in the general formula (3), and copolymerizing the vinyl ester-based monomer and ethylene therewith to obtain the copolymer, followed by conducting solvolysis and decarboxylation thereof, [3] a process of using as the comonomer 2,2-dialkyl-4-vinyl-1,3-dioxolane or the like as shown in the general formula (4), and copolymerizing the vinyl ester-based monomer and ethylene therewith to obtain the copolymer, followed by conducting solvolysis and solvolysis of acetal structure, and the like.

Of the above, the manufacturing process of [1] described above is preferably employed because of an advantage at the time of manufacturing that polymerization sufficiently proceeds to easily uniformly introduce the 1,2-diol structure unit into a polymer chain, and because the unreacted monomer is reduced, thereby being able to decrease impurities in the product. In terms of excellent copolymerization reactivity, the method of solvolyzing the copolymer obtained by copolymerizing 3,4-diacyloxy-1-butene with the vinyl ester-based monomer and ethylene is particularly preferred. Further, it is preferred to use 3,4-diacetoxy-1-butene as 3,4-diacyloxy-1butene. Furthermore, a mixture of the monomers exemplified in the manufacturing process of [1] described above may be used.

Incidentally, the reactivity ratios of the respective monomers at the time when vinyl acetate is used as the vinyl ester-based monomer and 3,4-diacetoxy-1-butene is copolymerized therewith are r(vinyl acetate)=0.710 and r(3,4-diacetoxy-1-butene)=0.701. This shows that 3,4-diacetoxy-1-butene is excellent in copolymerization reactivity with vinyl acetate, compared to r(vinyl acetate)=0.85 and r(vinyl ethylene carbonate)=5.4 in the case of vinyl ethylene carbonate described later.

Further, the chain transfer constant of 3,4-diacetoxy-1-butene is Cx(3,4-diacetoxy-1-butene)=0.003 (65°C). This shows that it does not happen to become a disincentive to polymerization to make it difficult to increase the degree of polymerization or to cause a decrease in the polymerization rate, compared to Cx(vinyl ethylene carbonate)=0.005(65°C) for vinyl ethylene carbonate and Cx(2,2-dimethyl-4-vinyl-1,3-dioxolane)=0.023(65°C) for 2,2-dimethyl-4-vinyl-1,3-dioxolane.

Furthermore in such 3,4-diacetoxy-1-butene, a by-product generated when the copolymer thereof is solvolyzed is the same as one derived from the vinyl acetate structural unit which is the main structural unit, so that it is unnecessary to provide a special apparatus or process for post-treatment thereof. This is also an industrially great advantage. In addition, 3,4-diacetoxy-1-butene may contain 3,4-diacetoxy-1-butane, 1,4-diacetoxy-1-butene, 1,4-diacetoxy-1-butane and the like as small amounts of impurities.

Incidentally, 3,4-diol-1-butene is available from Eastman Chemical Company, and 3,4-diacetoxy-1-butene for industrial production is available from Eastman Chemical Company and a product of Acros at the reagent level is available from the market. Further, it is also possible to utilize 3,4-diacetoxy-1-butene obtained as a by-product during a process for manufacturing 1,4-butandiol.

In the modified EVOH resin comprising the 1,2-diol structural unit, which is manufactured by the manufacturing process [2] described above, carbonate rings remain in side chains in the case of low degree of saponification or insufficient decarboxylation, and are decarboxylated at the time of melt molding, which tends to cause foaming of the resin. Further, similarly in the modified EVOH resin comprising the 1,2-diol structural unit, which is manufactured by the manufacturing process [2] described above, also in the modified EVOH resin comprising the 1,2-diol structural unit, which is manufactured by the manufacturing process [3] described above, monomer-derived functional groups (acetal rings) remaining in side chains are eliminated at the time of melt molding to tend to generate an odor. It is therefore necessary to use, taking this in mind.

The content of the structural unit represented by the above-mentioned general formula (1) in the modified EVOH resin (B) is usually from 0.1 to 30 ml%, preferably from 0.5 to 15 mol%, and particularly preferably from 1 to 8 mol%, as a value measured by a method described in JP-A-2004-359965 using ¹H-NMR. When such content is too low, formability tends to become poor. When it is too high, gas barrier properties of the product tends to decrease.
Further, in the modified EVA resin (B'), the copolymerization ratio of the compound represented by the above-mentioned general formula (2) corresponds to the content of the structural unit represented by the above-mentioned general formula (1) in the modified EVOH resin (B). Accordingly, it is usually from 0.1 to 30 ml%, preferably from 0.5 to 15 mol%, and particularly preferably from 1 to 8 mol%. Such content is adjustable by amount of monomer added.

The ethylene contents in the modified EVA resin (B') and the modified EVOH (B) do not vary before or after solvolysis and show the same value. It is from 20 to 60 mol%, preferably from 25 to 55 mol%, particularly preferably from 29 to 44 mol% and
more particularly preferably from 29 to 35 mol%, as a value measured on the basis of ISO 14663. When such content is too low, formability of the EVOH resin tends to be insufficient. Conversely, when it is too high, gas barrier properties of the EVOH resin tend to be insufficient.

Further, the viscosity of the modified EVA resin (B') is usually from 10¹ to 10⁵ mPa·s, preferably from 10² to 10⁴ mPa·s and particularly preferably from 10² to 10³ mPa·s, as a value measured with a B-type viscometer (rotor: No. 2, rotational speed: 10 rpm, paste temperature: 65°C). When such a value is too high or too low, compatibility tends to become poor.
The viscosity of the modified EVA resin (B') can be controlled by the resin content. When the resin content is large, the viscosity tends to increase, and when it is small, the viscosity tends to decrease.

Furthermore, the EVOH resin (A) and the modified EVOH resin (B) may contain a copolymerizable ethylenically unsaturated monomer-derived structural unit, for example, in an amount of 10 mol% or less, within the range not inhibiting the advantages of the invention. (That is to say, the EVA resin (A') and the modified EVA resin (B') may also similarly contain a copolymerizable ethylenically unsaturated monomer-derived structural unit, for example, in an amount of 10 mol% or less, within the range not inhibiting the advantages of the invention.)
Such monomers include olefins such as propylene, 1-butene and isobutene, hydroxyl group-containing α-olefins such as 3-butene-1-ol, 4-pentene-1-ol and 5-hexene-1,2-diol or derivatives thereof such as esterified products and acylated products, unsaturated acids such as acrylic acid, methacrylic acid, crotonic acid, phthalic acid (anhydride), maleic acid (anhydride) and itaconic acid (anhydride) or salts or mono- or dialkyl esters having 1 to 18 carbon atoms, acrylamides such as acrylamide, N-alkylacrylamide having 1 to 18 carbon atoms, N,N-dimethylacrylamide, 2-acrylamidepropanesulfonic acid or salt thereof, acrylamidepropyldimethylamine, acid salt thereof or quaternary salt thereof, methacrylamides such as methacrylamide, N-alkylmethacrylamide having 1 to 18 carbon atoms, N,N-dimethylmethacrylamide, 2-methacrylamidepropanesulfonic acid or salt thereof, methacrylamide-propyldimethylamine, acid salt thereof or quaternary salt thereof, N-vinylamides such as N-vinylpyrrolidone, N-vinylformamide and N-vinylacetamide, vinyl cyanides such as acrylonitrile and methacrylonitrile, vinyl ethers such as alkyl vinyl ether having 1 to 18 carbon atoms, hydroxyalkyl vinyl ether and alkoxyalkyl vinyl ether, halogenated vinyl compounds such as vinyl chloride, vinylidene chloride, vinyl fluoride, vinylidene fluoride and vinyl bromide, vinylsilanes such as trimethoxyvinylsilane, halogenated allyl compounds such as allyl acetate and allyl chloride, allyl alcohols such as dimethoxyallyl alcohol, trimethyl-(3-acrylamido-3-dimethylpropyl)-ammonium chloride, acrylamide-2-methylpropanesulfonic acid and the like.

Further, the EVOH resin composition obtained by the manufacturing process of the invention may be subjected to a post-modification reaction such as urethanization, acetalization, cyanoethylation or oxyalkylenation, within the range not impairing the spirit of the invention.

The blending ratio of the EVA resin (A') and the modified EVA resin (B') can be arbitrarily set depending on the purpose and use. For example, the blending ratio (A')/(B') is usually from 99/1 to 1/99 (by weight ratio), preferably from 90/10 to 5/95 (by weight ratio), and particularly preferably from 80/20 to 5/95 (by weight ratio).

In the invention, it is preferred that the ethylene content of the EVOH resin (A)
(that is to say, the EVA resin (A')) is larger than the ethylene content of the modified EVOH resin (B) (that is to say, the modified EVA resin (B')). In this case, properties of the EVOH resin composition can be fully exhibited.

Further, in the invention, the solvolysis of the EVA resin (A') and the modified EVA resin (B') is conducted in one system. When these are not solvolyzed in one system and are individually solvolyzed to manufacture the EVOH resin (A) and the modified EVOH resin (B), the melting peak value of the EVOH resin (A) usually becomes larger.
However, when a mixture of the EVA resin (A') and the modified EVA resin (B') is solvolyzed in one system, like the invention, the EVOH resin (A) contained in the EVOH resin composition produced tends to decrease in the melting peak value, compared to the case where the EVA resin (A') is solvolyzed independently (in the absence of the modified EVA resin (B')), that is to say, one manufactured by an ordinary process.

Further, conversely, when the EVA resin (A') and the modified EVA resin (B') are solvolyzed in one system, the modified EVOH resin (B) contained in the EVOH resin composition produced tends to increase in the melting peak value, compared to the case where the modified EVA resin (B') is solvolyzed independently (in the absence of the EVA resin (A')), that is to say, one manufactured by an ordinary process.

Accordingly, in the invention, when the ethylene content of the EVOH resin (A) (that is to say, the EVA resin (A')) is larger than the ethylene content of the modified EVOH resin (B) (that is to say, the modified EVA resin (B')), the solvolysis of the EVA resin (A') and the modified EVA resin (B') in one system appropriately acts on control of the melting peak value to automatically obtain the EVOH resin composition particularly small in the melting peak difference.
According to the invention, therefore, the manufacturing process is simplified, and the EVOH resin composition particularly small in the melting peak difference is automatically obtained.

The invention is most **characterized in that** the ethylene content of the EVA resin (A') is made higher than the ethylene content of the modified EVA resin (B'). The ratio (B')/(A') of such ethylene contents is 0.3 or more and less than 1, preferably 0.5 or more and less than 1, more preferably from 0.6 to 0.99 and particularly preferably from 0.8 to 0.97.
Further, the difference (A')-(B') in ethylene content is usually from 0.1 to 40 mol%, preferably from 0.1 to 30 mol%, more preferably from 1 to 10 mol%, and particularly preferably from 2 to 5 mol%.

Further, the difference in viscosity measured with a B-type viscometer (rotor: No. 2, rotational speed: 10 rpm, paste temperature: 65°C) between the EVA resin (A') and the modified EVA resin (B') is usually from 0 to 10⁵ mPa·s, preferably from 0 to 10⁴ mPa·s, and particularly preferably from 0 to 2,000 mPa·s, in terms of compatibility. The mixing efficiency tends to be improved with a decrease in the viscosity difference to improve compatibility.

### <Manufacturing Process>

In the process for manufacturing an EVOH resin composition of the invention, a mixture of the EVA resin (A') and the modified EVA resin (B') is solvolyzed in one system.

Such solvolysis is conducted using an alkali catalyst or an acid catalyst in a state where the EVA resin (A') and the modified EVA resin (B') are dissolved in an alcohol or a water/alcohol mixed solvent.
The alcohols usually include an aliphatic alcohol having 1 to 4 carbon atoms and the like. Preferred is methanol, ethanol, propanol or tert-butanol, and particularly preferred is methanol from an economical point of view.
In the case of the water/alcohol mixed solvent, the weight ratio thereof is usually from 10/90 to 90/10, preferably from 20/80 to 80/20, and particularly preferably from 40/60 to 60/40.

The concentrations of a solution of the EVA resin (A') and a solution of the modified EVA resin (B') are appropriately selected depending on the viscosity of the system. Usually, it is from 10 to 60% by weight (resin content), and preferably from 25 to 50% by weight (resin content). The viscosity can be controlled by the resin content. When the resin content is large, the viscosity tends to increase, and when it is small, the viscosity tends to decrease.

In order to obtain a mixed solution of the EVA resin (A') and the modified EVA resin (B'), there are (1) a method of dry blending both resins and dissolving them in a common solvent, (2) a method of dissolving respective resins in respective solvents and mixing respective resin solutions, (3) a method of dissolving one resin in a solvent, adding the other resin to the resulting solution and dissolving it therein, followed by mixing, and (4) a method of mixing both resins in a molten state, and then, dissolving the mixture in a solvent. Of these, the method of (2) is preferred in terms of productivity, and particularly, it is preferred to use solutions of the respective resins after polymerization as they are.

The catalysts used in solvolysis include alkali catalysts, acid catalysts and the like. Specific examples of the alkali catalysts include alkali metal hydroxides such as sodium hydroxide and potassium hydroxide, alkali metal alkoxides such as sodium methylate, sodium ethylate, potassium methylate and lithium methylate, and the like. The acid catalysts include inorganic acids such as sulfuric acid, hydrochloric acid and nitric acid, organic acids such as methasulfonic acid, zeolite, cation-exchange resins and the like. In terms of handling properties and industrial productivity, preferred are the alkali catalysts, and particularly preferred are the alkali metal hydroxides. That is to say, the solvolysis of the invention is preferably conducted under basic conditions. In other words, it is preferably saponification.
The amount of such a solvolysis catalyst used is appropriately selected depending on the method of solvolysis, the desired degree of solvolysis and the like. However, when the alkali catalyst is used, usually, it is suitably from 0.001 to 100 millimolar equivalent based on the amount of vinyl acetate.
The degree of solvolysis as used herein is a value measured on the basis of JIS K6726. In particular, when the solvolysis is saponification, it is called the degree of saponification.

With regard to the method of such solvolysis, any of batch solvolysis, continuous solvolysis on a belt and tower type continuous solvolysis is possible depending on the desired degree of solvolysis and the like. For the reasons that the amount of the alkali catalyst at the time of solvolysis can be decreased and that the solvolysis reaction easily proceeds at high efficiency, the tower type solvolysis under constant pressure is preferably used. The pressure at the time of solvolysis is usually selected from the range of 2 to 7 kg/cm², although that kind of generalization cannot be made depending on the desired ethylene content. The temperature at this time is usually from 60 to 140°C, and the reaction is usually conducted for 0.5 to 6.0 hours.

A methanol solution of the EVOH resin composition solvolyzed as described above is solid-liquid separated by a known method, for example, a centrifugal separator or a method of extruding it in a coagulation bath. As a drying method, there can also be employed a known method, which includes fluidized drying conducted while being stirred and dispersed mechanically or by hot air, and ventilation drying conducted without dynamic actions such as stirring and dispersion. Driers for conducting the fluidized drying include a cylindrical agitated trough dryer, a circular tube dryer, a rotary dryer, a fluidized-bed dryer, a vibrating fluidized-bed dryer, a conical rotary dryer and the like. Further, dryers for conducting the ventilation drying include a batch-wise box type dryer as a material standing type, and a band dryer, a tunnel dryer, a vertical dryer and the like as a material transfer type. However, they are not limited thereto. It is also possible to use the fluidized drying and the ventilation drying in combination.

As a heating gas used at the time of the drying treatment, there is used air or an inert gas (nitrogen gas, helium gas, argon gas or the like). The temperature of the heating gas is preferably from 40 to 150°C in terms of productivity and prevention of thermal degradation of the EVOH resin composition. The time of the drying treatment is preferably from about 15 minutes to about 72 hours in terms of productivity and prevention of thermal degradation, although it depends on the water content of the EVOH resin composition and the amount thereof treated.

The drying treatment is conducted under the above-mentioned conditions. The water content of the resin composition after the drying treatment is usually from 0.001 to 5% by weight, preferably from 0.01 to 2% by weight, and particularly preferably from 0.1 to 1% by weight.

The average degree of solvolysis of the EVOH resin composition obtained by the manufacturing process of the invention is usually from 90 to 100 mol%, preferably from 95 to 100 mol%, and particularly preferably from 99 to 100 mol%, as a value measured on the basis of JIS K6726. When such a degree of solvolysis is too low, gas barrier properties tend to decrease.

Further, the MFR of the EVOH resin composition obtained by the manufacturing process of the invention is usually from 1 to 120 g/10 min, preferably from 1 to 45 g/10 min, and particularly preferably from 3 to 25 g/10 min, as a value measured at 210°C under a load of 2160 g.

The ratio of the EVOH resin (A) and the modified EVOH resin (B) in the EVOH resin composition obtained by the manufacturing process of the invention corresponds to the ratio of the above-mentioned EVA resin (A') and modified EVA resin (B'). For example, the blending ratio (A)/(B) and the blending ratio (A')/(B') are usually from 99/1 to 1/99 (by weight ratio), preferably from 90/10 to 5/95 (by weight ratio), and particularly preferably from 80/20 to 5/95 (by weight ratio).

The melting peak value of the resin composition obtained by the manufacturing process of the invention is obtained by measuring a second run obtained by measuring a main melting peak with a differential scanning calorimeter (DSC) at a rate of temperature increase of 5 °C/min.
The melting peak difference of the resin composition obtained by the manufacturing process of the invention is usually from 0 to 20°C, and preferably 0 to 10°C, and preferably 0 (that is to say, having only one melting peak). When such a value is too large, the compatibility of the EVOH resin (A) and the modified EVOH resin (B) tends to become poor.

Further, a known compounding agent can be incorporated into the EVOH resin composition obtained by the manufacturing process of the invention within the range not inhibiting the object of the invention (for example, 10% by weight or less based on the EVOH resin content). Such compounding agents include, for example, acids such as acetic acid, phosphoric acid and boric acid and metal salts thereof such as alkali metal, alkali earth metal and transition metal salts thereof. Examples thereof include lubricants such as saturated aliphatic amides (for example, stearic acid amide and the like), unsaturated fatty acid amides (for example, oleic acid amide and the like), bis-fatty acid amides (for example, ethylene-bis-stearic acid amide and the like) and low-molecular-weight polyolefins (for example, low-molecular-weight polyethylene having a molecular weight of about 500 to about 10,000, low-molecular-weight polypropylene and the like), plasticizers such as aliphatic polyhydric alcohols such as ethylene glycol, glycerol and hexanediol, light stabilizers, antioxidants, drying agents, ultraviolet absorbers, coloring agents, antistatic agents, surfactants, antimicrobial agents, antiblocking agents, insoluble inorganic salts (for example, hydrotalcite and the like), fillers (for example, an inorganic filler and the like), oxygen absorbers, other resins other than EVOH (for example, polyolefin, polyamide and the like) and the like.

In the invention, the EVOH resin (A) and the modified EVOH resin (B)
comprising the structural unit represented by the above-mentioned general formula (1) are each obtained by conducting solvolysis of the above-mentioned EVA resin (A') and the above-mentioned modified EVA resin (B') which each are resins before subjecting to solvolysis, in one system, and when the ethylene content of the EVA resin (A') is higher than the ethylene content of the modified EVA resin (B'), the EVOH resin composition small in the melting peak difference is obtained, and unexpected advantages that productivity and formability are improved are obtained.

### Examples

The invention will be specifically described below with reference to examples. Incidentally, "parts" and "%" in the examples means weight basis, unless otherwise specified.

The ethylene content of each EVA resin was measured on the basis of ISO 14663.
The viscosity of each EVA solution was measured with a B-type viscometer (rotor: No. 2, rotational speed: 10 rpm, paste temperature: 65°C).
The average degree of solvolysis of each EVOH resin was measured on the basis of JIS K6726.
The content of the modified structural unit of the modified EVA resin (B') was measured by the method described in JP-A-2004-359965 using ¹H-NMR.
The melting peak was obtained by measuring a second run obtained by measuring a melting peak with a differential scanning calorimeter (DSC) at a rate of temperature increase of 5°C/min.
The MFR of the resulting EVOH resin composition was measured at 210°C under a load of 2160 g.

### Example 1

An EVA resin (A1') having a viscosity of 2,800 mPa·s in a methanol solution having an ethylene content of 44 mol% and a resin content of 40% was used as the EVA resin (A'), and a modified EVA resin (B1') having a viscosity of 500 mPa·s in a methanol solution having a 3,4-diacetoxy-1-butene-derived structural unit content of 3 mol%, an ethylene content of 35 mol% and a resin content of 40% was used as the modified EVA resin (B').

10 parts by weight of a methanol solution (resin content: 40% by weight) of the EVA resin (A1') and 90 parts by weight of a methanol solution (resin content: 41% by weight) of the modified EVA resin (B1') were mixed (to give a resin content weight ratio (A)/(B) of 10/90 after solvolysis). Then, 8 parts by weight of a NaOH aqueous solution (NaOH: 3.5% by weight) was incorporated into the mixed resin solution, followed by conducting solvolysis at 100°C for 3 hours to obtain an EVOH resin composition solution of an EVOH resin (A) and a modified EVOH resin (B). The resulting EVOH resin composition solution was immersed in a coagulation bath to allow precipitation, followed by drying at 118°C for 18 hours to obtain a solid EVOH resin composition.

The average degree of saponification of the resulting EVOH resin composition was 99.8 mol%, and the MFR was 12 g/10 min. The melting peak of such an EVOH resin composition was measured. As a result, peaks were confirmed at 151 °C and 160°C.

### Example 2

An EVA resin (A2') having a viscosity of 3,500 mPa·s in a methanol solution having an ethylene content of 3 8 mol% and a resin content of 49% was used as the EVA resin (A'), and a modified EVA resin (B2') having a viscosity of 2,000 mPa·s in a methanol solution having a 3,4-diacetoxy-1-butene-derived structural unit content of 3 mol%, an ethylene content of 35 mol% and a resin content of 49% was used as the modified EVA resin (B').

47 parts by weight of a methanol solution (resin content: 49% by weight) of the EVA resin (A2') and 53 parts by weight of a methanol solution (resin content: 45% by weight) of the modified EVA resin (B2') were mixed (to give a resin content weight ratio (A)/(B) of 50/50 after solvolysis). Then, 6 parts by weight of a NaOH aqueous solution (NaOH: 3.5% by weight) was incorporated into the mixed resin solution, followed by conducting solvolysis at 107°C for 3 hours to obtain an EVOH resin composition solution of an EVOH resin (A) and a modified EVOH resin (B). The resulting EVOH resin composition solution was extruded in a coagulation bath in a strand form to allow precipitation. Such strands were cut and dried at 118°C for 16 hours to obtain a solid EVOH resin composition.

The average degree of saponification of the resulting EVOH resin composition was 99.8 mol%, and the MFR was 11.4 g/10 min. The melting peak of such an EVOH resin composition was measured. As a result, a peak was confirmed at 166°C.

### Example 3

A solid EVOH resin composition was obtained in the same manner as in Example 2 with the exception that 10 parts by weight of a methanol solution (resin content: 44% by weight) of the EVA resin (A2') and 90 parts by weight of a methanol solution (resin content: 45% by weight) of the modified EVA resin (B2') were mixed (to give a resin content weight ratio (A)/(B) of 10/90 after solvolysis).
The average degree of saponification of the resulting EVOH resin composition was 99.8 mol%, and the MFR was 10.7 g/10 min. The melting peak of such an EVOH resin composition was measured. As a result, a peak was confirmed at 155°C.

### Example 4

A solid EVOH resin composition was obtained in the same manner as in Example 2 with the exception that 69 parts by weight of a methanol solution (resin content: 49% by weight) of the EVA resin (A2') and 31 parts by weight of a methanol solution (resin content: 48% by weight) of the modified EVA resin (B2') were mixed (to give a resin content weight ratio (A)/(B) of 70/30 after solvolysis).
The average degree of saponification of the resulting EVOH resin composition was 99.8 mol%, and the MFR was 11.4 g/10 min. The melting peak of such an EVOH resin composition was measured. As a result, a peak was confirmed at 169°C.

### Comparative Example 1

Into 47 parts by weight of the methanol solution (resin content: 49% by weight) of the EVA resin (A2') used in Example 2, 6 parts by weight of the NaOH aqueous solution (NaOH: 3.5% by weight) was incorporated, followed by conducting solvolysis at 107°C for 3 hours to obtain a solution of an EVOH resin (A2) as the EVOH resin (A). Such an EVOH resin (A2) solution was immersed in a coagulation bath to allow precipitation, followed by drying at 118°C for 16 hours to obtain a solid EVOH resin (A2).
Further, 7 parts by weight of the NaOH aqueous solution (NaOH: 3.5% by weight) was incorporated into 53 parts by weight of the methanol solution (resin content: 45% by weight) of the modified EVA resin (B2') used in Example 2, followed by conducting solvolysis at 100°C for 3 hours to obtain a modified EVOH resin (B2) solution. Such a modified EVOH resin (B2) solution was immersed in a coagulation bath to allow precipitation, followed by drying at 118°C for 16 hours to obtain a solid EVOH resin (B2).

50 parts by weight of the above-mentioned EVOH resin (A2) and 50 parts by weight of the modified EVOH resin (B2) were dry-blended ((A)/(B)=50/50 by weight ratio), and melt kneaded in an extruder at 210°C. Such an EVOH resin composition was extruded in a strand form and cut with a cutter to obtain EVOH resin composition pellets.
The average degree of saponification of the resulting EVOH resin composition was 99.8 mol%, and the MFR was 11.5 g/10 min. The melting peak of such an EVOH resin composition was measured. As a result, peaks were confirmed at 152°C and 173°C.

### Comparative Example 2

A solid EVOH resin composition was obtained in the same manner as in Example 3 with the exception that an EVA resin (A3') having a viscosity of 6,300 mPa·s in a methanol solution having an ethylene content of 32 mol% and a resin content of 36% was used as the EVA resin (A'), and that the modified EVA resin (B1') having a viscosity of 500 mPa·s in a methanol solution having a 3,4-diacetoxy-1-butene-derived structural unit content of 3 mol%, an ethylene content of 35 mol% and a resin content of 40% was used as the modified EVA resin (B').
The average degree of saponification of the resulting EVOH resin composition was 99.8 mol%, and the MFR was 20.9 g/10 min. The melting peak of such an EVOH resin composition was measured. As a result, peaks were confirmed at 139°C and 168°C.

The conditions and results in Examples and Comparative Examples are shown in Table 1.

**[Table 1]**

| | EVA Resin (A') | EVA Resin (B') | | Ethylene Content Ratio of EVA Resin (A') and EVA Resin (B') (B')/(A') | EVOH Resin (A)/ EVOH Resin (B) (Resin Content Weight Ratio) | Average Degree of Saponification of EVOH Resin Composition Obtained (mol%) | Melting Peak (Absolute Value of Melting Peak Difference) |
|---|---|---|---|---|---|---|---|
| | Ethylene Content | 3,4-Diacet-oxy-1-butene Content | Ethylene Content | | | | |
| Example 1 | 44 | 3 | 35 | 0.80 | 10/90 | 99.8 | 151°C |
| | | | | | | | 160°C |
| | | | | | | | (9°C) |
| Example 2 | 38 | 3 | 35 | 0.92 | 50/50 | 99.8 | 166°C |
| | | | | | | | (0°C) |
| Example 3 | 38 | 3 | 35 | 0.92 | 10/90 | 99.8 | 153°C |
| | | | | | | | (0°C) |
| Example 4 | 38 | 3 | 35 | 0.92 | 70/30 | 99.8 | 169°C |
| | | | | | | | (0°C) |
| Comparative Example 1 | 38 | 3 | 35 | 0.92 | 50/50 (Dry-blend) | 99.8 | 152°C |
| | | | | | | | 173°C |
| | | | | | | | (21°C) |
| Comparative Example 2 | 32 | 3 | 35 | 1.1 | 10/90 | 99.8 | 139°C |
| | | | | | | | 168°C |
| | | | | | | | (29°C) |

Incidentally, an EVOH resin having an ethylene content of 32 mol% and a degree of saponification of 99.8 mol% manufactured by a process in which solvolysis was separately conducted had a peak at 183°C, an EVOH resin having an ethylene content of 38 mol% and a degree of saponification of 99.8 mol% had a melting peak at 173°C, and an EVOH resin having an ethylene content of 44 mol% and a degree of saponification of 99.8 mol% had a melting peak at 164°C. An EVOH resin having a structural unit (1a) content of 3 mol%, an ethylene content of 35 mol% and a degree of saponification of 99.8 mol% had a melting peak at 150°C.

In Comparative Example 1 in which the EVOH resin composition was obtained by the process of separately manufacturing the EVOH resin (A) and the modified EVOH resin (B) comprising the structural unit represented by the general formula (1), respectively, and dry-blending the respective resins, followed by melt kneading, the melting peaks were confirmed at 152°C (corresponding to the modified EVOH resin (B)) and 173°C (corresponding to the EVOH resin (A)), and the difference therebetween was 21°C.

Compared to this, in Example 1 in which the EVOH resin composition was obtained by the process of the invention of conducting solvolysis of the EVA resin (A') and the modified EVA resin (B') in one system, and making the ethylene content of the EVA resin (A') higher than the ethylene content of the modified EVA resin (B'), the EVOH resin composition having an absolute value of the melting peak difference of 9°C was obtained. In Examples 2 to 4, the EVOH resin compositions having an absolute value of the melting peak difference of 0 (that is to say, having only one melting peak) were obtained.

The EVOH resin compositions obtained by the manufacturing process of the invention become smaller in the melting peak difference than the EVOH resin composition obtained by the process of dry-blending the respective resins (Comparative Example 1) and the EVOH resin composition obtained by the process of conducting solvolysis of the EVA resin (A') and the modified EVA resin (B') in one system under the conditions that the ethylene content of the EVA resin (A') was lower than the ethylene content of the modified EVA resin (B') (Comparative Example 2). This reveals that the EVOH resin composition obtained by the manufacturing process of the invention is an EVOH resin composition difficult to be phase separated, because meltability is improved at the time of melt molding to improve compatibility, so that when solidified from a molten state, solidification becomes uniform.

While the invention has been described in detail and with reference to specific embodiments thereof, it will be apparent to those skilled in the art that various changes and modifications can be made without departing from the spirit and scope of the invention.
This application is based on Japanese Patent Application No. 2007-335892 filed on December 27, 2007, the contents of which are incorporated herein by reference.

### Industrial Applicability

According to the invention, in the EVOH resin composition comprising the modified EVOH resin comprising the structural unit represented by the general formula (1) and the different EVOH resin, the EVOH resin composition small in the melting peak difference can be obtained by a simple process, and the EVOH resin composition excellent in productivity and formability can be provided.

## Claims

1. A process for manufacturing a composition of a solvolysis product of an ethylene-vinyl ester copolymer, which comprises conducting solvolysis of an ethylene-vinyl ester copolymer (A') and a modified ethylene-vinyl ester copolymer (B') comprising a structural unit derived from a compound represented by the general formula (2) in one system to manufacture the composition of a solvolysis product of an ethylene-vinyl ester copolymer comprising a solvolysis product (A) of the ethylene-vinyl ester copolymer and a solvolysis product (B) of the modified ethylene-vinyl ester copolymer comprising a structural unit represented by the general formula (1), wherein a ratio of an ethylene content (B')/(A') of the ethylene-vinyl ester copolymer (A') and the modified ethylene-vinyl ester copolymer (B') in the step of conducting solvolysis is 0.3 or more and less than 1: 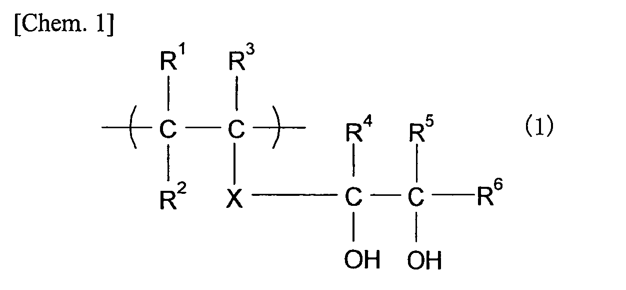 wherein R¹, R² and R³ each independently represent a hydrogen atom or an organic group, X represents a single bond or a bonding chain, and R⁴, R⁵ and R⁶ each independently represent a hydrogen atom or an organic group; and 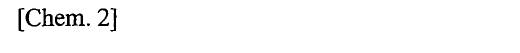 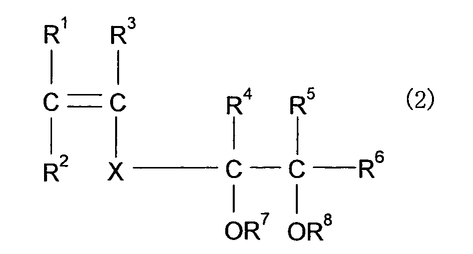 wherein R¹, R² and R³ each independently represent a hydrogen atom or an organic group, X represents a single bond or a bonding chain, R⁴, R⁵ and R⁶ each independently represent a hydrogen atom or an organic group, R⁷ and R⁸ each independently represent a hydrogen atom, a hydrocarbon group or R⁹-CO- (wherein R⁹ represetns an alkyl group), R⁷ and R⁸ may bond to form a five-membered ring and the five-membered ring represents a cyclic carbonate structure or a cyclic acetal structure.

2. The process for manufacturing a composition of a solvolysis product of an ethylene-vinyl ester copolymer according to claim 1, wherein a blending ratio (A')/(B') of the ethylene-vinyl ester copolymer (A') and the modified ethylene-vinyl ester copolymer (B') is from 99/1 to 1/99 by weight ratio.

3. The process for manufacturing a composition of a solvolysis product of an ethylene-vinyl ester copolymer according to claim 1 or 2, wherein the modified ethylene-vinyl ester copolymer (B') comprises the structural unit derived from a compound represented by the general formula (2) in an amount of 0.1 to 30 mol%.

4. The process for manufacturing a composition of a solvolysis product of an ethylene-vinyl ester copolymer according to any one of claims 1 to 3, wherein a difference (A') - (B') in the ethylene content between the ethylene-vinyl ester copolymer (A') and the modified ethylene-vinyl ester copolymer (B') is from 0.1 to 40 mol%.

5. The process for manufacturing a composition of a solvolysis product of an ethylene-vinyl ester copolymer according to any one of claims 1 to 4, wherein the ethylene-vinyl ester copolymer (A') and the modified ethylene-vinyl ester copolymer (B') have the ethylene content of 20 to 60 mol%.

6. The process for manufacturing a composition of a solvolysis product of an ethylene-vinyl ester copolymer according to any one of claims 1 to 5, wherein the composition of a solvolysis product of an ethylene-vinyl ester copolymer has a difference of melting peak of 0 to 20°C.

7. The process for manufacturing a composition of a solvolysis product of an ethylene-vinyl ester copolymer according to any one of claims 1 to 6, wherein the composition of a solvolysis product of an ethylene-vinyl ester copolymer has an average degree of solvolysis of 90 to 100 mol%.

8. The process for manufacturing a composition of a solvolysis product of an ethylene-vinyl ester copolymer according to any one of claims 1 to 7, wherein the composition of a solvolysis product of an ethylene-vinyl ester copolymer has an MFR of 1 to 120 g/10 min as a value measured at 210°C under a load of 2160 g.

9. The process for manufacturing a composition of a solvolysis product of an ethylene-vinyl ester copolymer according to any one of claims 1 to 8, wherein R¹ to R³ each independently represent an alkyl group having 1 to 4 carbon atoms or a hydrogen atom, and R⁴ to R⁶ each independently represent an alkyl group having 1 to 4 carbon atoms or a hydrogen atom in the structural unit represented by the general formula (1) and the compound represented by the general formula (2).

10. The process for manufacturing a composition of a solvolysis product of an ethylene-vinyl ester copolymer according to any one of claims 1 to 9, wherein X represents a single bond or a hydrocarbon chain having 1 to 6 carbon atoms in the structural unit represented by the general formula (1) and the compound represented by the general formula (2).

11. The process for manufacturing a composition of a solvolysis product of an ethylene-vinyl ester copolymer according to any one of claims 1 to 8, wherein the compound represented by the general formula (2) is a compound represented by the following general formula (2a): 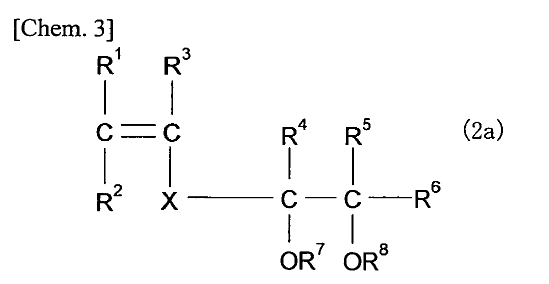 wherein R¹, R² and R³ each independently represent a hydrogen atom or an organic group, X represents a single bond or a bonding chain, R⁴, R⁵ and R⁶ each independently represent a hydrogen atom or an organic group, and R⁷ and R⁸ each independently represent a hydrogen atom or R⁹-CO- (wherein R⁹ represents an alkyl group).

12. The process for manufacturing a composition of a solvolysis product of an ethylene-vinyl ester copolymer according to any one of claims 1 to 11, wherein the structural unit represented by the general formula (1) is a structural unit represented by the following general formula (1a); 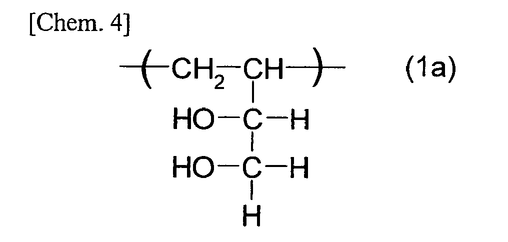 and the compound represented by the general formula (2) is 3,4-diacetoxy-1-butene.

13. The process for manufacturing a composition of a solvolysis product of an ethylene-vinyl ester copolymer according to any one of claims 1 to 12, wherein the solvolysis is conducted under a basic condition.

14. The process for manufacturing a composition of a solvolysis product of an ethylene-vinyl ester copolymer according to any one of claims 1 to 13, wherein the solvolysis is conducted in an alcohol or a mixed solvent of water/alcohol.
